(19) Europäisches Patentamt
European Patent Office
Office européen des brevets

(11) **EP 1 065 106 A2**

(12) **EUROPÄISCHE PATENTANMELDUNG**

(43) Veröffentlichungstag:
03.01.2001 Patentblatt 2001/01

(51) Int. Cl.⁷: **B60R 16/02**

(21) Anmeldenummer: **00250171.6**

(22) Anmeldetag: **31.05.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **30.06.1999 DE 19930017**

(71) Anmelder:
**Volkswagen Aktiengesellschaft
38436 Wolfsburg (DE)**

(72) Erfinder: **Warmers, Heinrich
38104 Braunschweig (DE)**

(74) Vertreter:
**Effert, Bressel und Kollegen
Radickestrasse 48
12489 Berlin (DE)**

(54) **Vorrichtung zur Spannungserzeugung in einem Kraftfahrzeug**

(57) Das Bordnetz in einem Kraftfahrzeug enthält im allgemeinen einen Generator, eine sogenannte Lichtmaschine, eine Batterie in Form eines Akkus und mehrere Verbraucher für +12 Volt. Für die zunehmende Zahl der elektrischen Verbraucher in einem Kraftfahrzeug ist die Einführung eines zweiten Bordnetzes mit einer höheren Betriebsspannung von +42 Volt geplant. Für die Erzeugung der beiden verschieden hohen Betriebsspannungen durch einen mit dem Fahrzeugmotor gekoppelten Generator ist es bekannt, den Stator des Generators mit zwei galvanisch voneinander getrennten Wicklungen zu versehen. Da beide Wicklungen demselben Erregerfeld unterliegen, kann über die Erregerwicklung nur eine der beiden Betriebsspannungen stabilisiert werden.

Aufgabe ist es, eine Vorrichtung zu schaffen, die einen einfachen Aufbau, einen hohen Wirkungsgrad und eine getrennte Regelung beider Betriebsspannungen ermöglicht.

Die höhere Betriebsspannung (U2) wird über die Erregerwicklung (G3) stabilisiert, während die niedrigere Betriebsspannung (U1) über eine Impulsbreitenmodulation von aktiv gesteuerten Gleichrichtern in Form von MOS-FETs stabilisiert wird.

FIG. 1

EP 1 065 106 A2

**Beschreibung**

Die Erfindung geht aus von einer Vorrichtung zur Spannungserzeugung in einem Kraftfahrzeug gemäß dem Oberbegriff des Anspruchs 1. Eine derartige Vorrichtung ist bekannt durch die DE 196 02 401 A1.

Ein Kraftfahrzeug, insbesondere ein Pkw, enthält im allgemeinen einen Akku für 12V für den Starterbetrieb und für die Speisung der übrigen Stromverbraucher innerhalb des Bordnetzes des Fahrzeuges.

Wegen der zunehmenden Zahl elektrischer Verbraucher in einem Pkw, wie zum Beispiel Scheibenheizung, Klimaanlage, elektrische Fensterverstellung, verstellbare Sitze, verstellbare Lenkräder, elektromagnetisch betätigte Einspritzventile und dgl. ist die Einführung einer zweiten Bordnetzspannung von etwa 42V vorgesehen, insbesondere um den Kupferaufwand für die Stromleitungen und den Eisenaufwand für die Übertrager und dgl. zu verringern. Die Größenordnung von 42V für diese zweite, höhere Betriebsspannung ergibt sich dadurch, daß diese Spannung noch unterhalb der sogenannten Berührungsspannung in der Größenordnung von 60V liegen soll, oberhalb der die Berührung mit der Spannung gefährlich wird und somit erhöhte Anforderungen an die Isolation und den Berührungsschutz gestellt werden. Da neben dieser erhöhten Spannung die übliche Bordnetzspannung von 12V erhalten bleiben soll, besteht die Notwendigkeit, zusätzlich zu der in einem Generator (Lichtmaschine) erzeugten Spannung von 12V eine zweite Spannung von 42V zu erzeugen.

Hierzu ist es bekannt, einen von dem Fahrzeugmotor angetriebenen Generator, auch Lichtmaschine genannt, mit zwei galvanisch voneinander getrennten Statorwicklungen zu versehen und aus den durch die Statorwicklungen induzierten Spannungen über Gleichrichterbrücken zwei verschieden hohe Betriebsspannungen für zwei Bordnetze abzuleiten. Wegen der stark unterschiedlichen Drehzahl der als Fahrzeugmotor dienenden Verbrennungskraftmaschine (VKM) und wegen Änderungen in der Belastung ist es notwendig, derartige Betriebsspannungen zu stabilisieren, das heißt so zu steuern oder zu regeln, daß ihr Wert ausreichend konstant bleibt. Eine derartige Steuerung oder Regelung erfolgt im allgemeinen über die Erregerwicklung des Generators. Das heißt, der in die Erregerwicklung fließende Gleichstrom wird in Abhängigkeit von der Drehzahl, dem jeweiligen Wert der erzeugten Betriebsspannung oder auch von dem durch die Last fließenden Strom so gesteuert oder geregelt, daß die erzeugte Betriebsspannung am Ausgang der Gleichrichterbrücke ausreichend konstant bleibt.

Die beiden galvanisch voneinander getrennten Statorwicklungen unterliegen indessen demselben Erregerfeld. Deshalb kann jeweils nur eine der beiden erzeugten Betriebsspannungen geregelt, das heißt stabilisiert werden.

Der Erfindung liegt die Aufgabe zugrunde, eine im Aufbau einfache Vorrichtung zum Erzeugen verschieden hoher Betriebsspannungen zu schaffen, die mit einem hohen Wirkungsgrad arbeitet und eine getrennte Regelung der beiden von den Statorwicklungen erzeugten Betriebsspannungen ermöglicht.

Diese Aufgabe wird durch die im Anspruch 1 angegebene Erfindung gelöst. Vorteilhafte Weiterbildungen der Erfindung sind in den Unteransprüchen angegeben.

Bei der Erfindung erfolgt also eine gemischte Regelung der Betriebsspannungen, nämlich einmal über den Erregerstrom und zum anderen durch eine Gleichrichterbrücke mit aktiv gesteuerten Gleichrichtern in Form von MOS-FETs. Durch die Ableitung beider Betriebsspannungen von dem Stator desselben Generators ergibt sich zunächst ein konstruktiv einfacher Aufbau, da mehrere Bauteile doppelt genutzt werden können. Die Anordnung der beiden Wicklungen jeweils in denselben Nuten des Stators bewirkt eine besonders feste Kopplung zwischen den beiden Wicklungen, die auch für verschiedene, später beschriebene Weiterbildungen der Erfindung vorteilhaft ist. Die getrennten Wicklungen in denselben Nuten des Statorpakets ermöglichen auch einen unterschiedlichen Leitungsquerschnitt für die beiden Wicklungen.

Die Anwendung von MOS-FETs als aktiv gesteuerte Gleichrichter bringt indessen folgende Vorteile:

MOS-FETs haben eine besonders geringe Durchflußspannung von 0,2V und einen Durchlaßwiderstand von nur einigen mOhm, so daß die Spannungs- und Leistungsverluste sehr gering gehalten werden können und einen hohen Wirkungsgrad ermöglichen. MOS-FETs ermöglichen auch eine Regelung der erzeugten Betriebsspannungen über die Gleichrichterbrücke im Gegensatz zu bisher verwendeten passiven Gleichrichtern. Ein weiterer Vorteil besteht in folgendem: Die Ausnutzung und der Wirkungsgrad einer Maschine sind wesentlich abhängig von dem sogenannten $\cos\varphi$, der die Phasenverschiebung zwischen der induzierten Spannung (EMK) und dem Strom darstellt. Bei der Anwendung von passiven Dioden für die Gleichrichtung fehlen Spannungs/Zeit-Flächen, so daß der Strom zu der induzierten Spannung phasenverschoben wird. Der genannte $\cos\varphi$ beträgt dann nur etwa 0,6 bis 0,7 %. Dadurch wird der elektrischen Maschine eine nennenswerte Kommutierungs-Blindfeistung entnommen. Bei der Anwendung von MOS-FETs als aktive gesteuerte Gleichrichter kann die Stromflußzeit in dem Gleichrichter während einer Periode der in der Wicklung induzierten Spannung so gesteuert werden, daß sie phasengleich mit der EMK ist und ein $\cos\varphi$ von annähernd 1, zum Beispiel 0,96, erreicht oder weitestgehend angenähert werden kann. Das beruht darauf, daß ein MOS-FET zu jeder beliebigen Zeit innerhalb der Netzperiode schnell ein- oder ausgeschaltet werden kann. Es kann also aus einem Generator mit einem bestimmten Aufbau mehr Nutzenergie gewonnen werden, wodurch auch der Aufwand an Kupfer und Eisen verringert wird. Die Steuerung der MOS-FETs für die Gleichrichtung und Stabilisierung ist weitestgehend leistungslos, da für die Steuerung nur eine Spannung an einer relativ kleinen Kapazität von ca 500pF ausreicht und kein statischer Steuerstrom in die Steuerstrecke des MOS-FET fließt.

Vorzugsweise wird der Stromflußwinkel der MOS-FETs innerhalb einer Periode der von der Statorwicklung erzeugten Wechselspannung in Abhängigkeit von der Winkellage des Läufers des Generators so gesteuert, daß der Stromflußwinkel etwa phasengleich mit der von der Statorwicklung erzeugten Wechselspannung ist und ein $\cos\varphi$ in der Nähe von 1 erzielt wird.

Der Istwert für die Regelung wird vorzugsweise aus der zu regelnden Betriebsspannung selbst abgeleitet. Zusätzlich kann für die Regelung einer Betriebsspannung der Strom durch die von dieser Betriebsspannung gespeiste Last ausgewertet werden. Letzteres ist vorteilhaft für eine Ladungssteuerung der Batterie, für eine Regelung des Stroms bei Starterbetrieb und eine Regelung des Stroms im Wechselrichterbetrieb.

Bei einer Weiterbildung der Erfindung werden die beiden galvanisch voneinander getrennten Statorwicklungen bei Generatorstillstand als Transformator zum Energieaustausch zwischen den beiden Netzen mit der niedrigen und der hohen Betriebsspannung ausgenutzt. Dadurch wird ohne zusätzlichen Aufwand eine Energieübertragung zwischen den beiden Bordnetzen in beiden Richtungen ermöglicht. Vorteilhaft für diese Lösung ist die besonders enge Kopplung zwischen den beiden Wicklungen aufgrund ihrer Lage in denselben Nuten des Stators. Für diese Weiterbildung sind die Gleichrichterbrücken beider Statorwicklungen mit aktiv gesteuerten Gleichrichtern in Form von MOS-FETs ausgebildet. Die Gleichrichterbrücken dienen dann jeweils als Wechselrichter für eine an die Wicklung angelegte Betriebsgleichspannung, zum Beispiel von einer Batterie. Diese Weiterbildung kann zum Beispiel dazu benutzt werden, die Ausgangsspannung eines Ladegerätes an die davon abweichende Nennspannung eines zu ladenden Akkus anzupassen. Das kann notwendig sein, wenn zum Beispiel ein Ladegerät für einen Akku mit der hohen Betriebsspannung von 42 Volt nicht verfügbar ist.

Bei einer anderen Weiterbildung der Erfindung ist für einen Starterbetrieb für den Fahrzeugmotor ein Akku mit einer Nennspannung entsprechend der höheren Betriebsspannung von zum Beispiel 42 Volt an die Statorwicklung für die niedrigere Betriebsspannung von zum Beispiel 12V anschaltbar. Durch dieses Anlegen einer an sich zu hohen Spannung an die Wicklung für die niedrige Betriebsspannung wird ein starkes Drehmoment erzeugt, das das sogenannte Losbrechmoment des Fahrzeugmotors erreicht oder überschreitet und damit einen Starterbetrieb ermöglicht. Die Wicklung ist dabei zwar durch die an sich zu hohe Spannung überlastet. Dadurch ergibt sich aber kein Nachteil, weil während der Startdauer von ca. 5 bis 10 Sekunden eine für die Wicklung gefährliche Erwärmung nicht auftreten kann. Auch hierbei ist die jeweils einer Wicklung zugeordnete Gleichrichterbrücke mit aktiv gesteuerten Gleichrichtern in Form von MOS-FETs ausgebildet, um die an die Wicklung angelegte Gleichspannung von einer Batterie in eine Wechselspannung für die Speisung der Wicklung umzusetzen.

Bei einer anderen Weiterbildung der Erfindung werden die beiden Betriebsspannungen von zwei getrennten Generatoren abgeleitet, die von derselben, mit dem Fahrzeugmotor gekuppelten Welle angetrieben werden. Diese Lösung hat den Vorteil, daß beide Betriebsspannungen unabhängig voneinander durch Regelung des Erregerstromes stabilisiert werden können. Zusätzlich kann auch hier für eine zusätzliche Stabilisierung die genannte Gleichrichterbrücke mit aktiv gesteuerten Gleichrichtern in Form von MOS-FETs eingesetzt werden.

Die Erfindung wird im folgenden anhand der Zeichnung an mehreren Ausführungsbeispielen erläutert. Darin zeigen

Figur 1     ein Schaltbild mit den beiden Statorwicklungen und der Schaltung zur Stabilisierung der erzeugten Betriebsspannungen,

Figur 2     eine Abwandlung der Schaltung von Figur 1, bei der beide Betriebsspannungen mittels einer aktiv gesteuerten Gleichrichterbrücke stabilisiert werden,

Figur 3     eine Ausnutzung der Schaltung von Figur 2 für einen Starterbetrieb für den Fahrzeugmotor,

Figur 4     im Prinzip die Anordnung der Wicklungen in den Nuten des Rotors,

Figur 5     ein Beispiel für eine Weiterbildung der Erfindung mit getrennten Generatoren und

Figur 6     Ersatzschaltbilder für die beiden Generatoren in Figur 5.

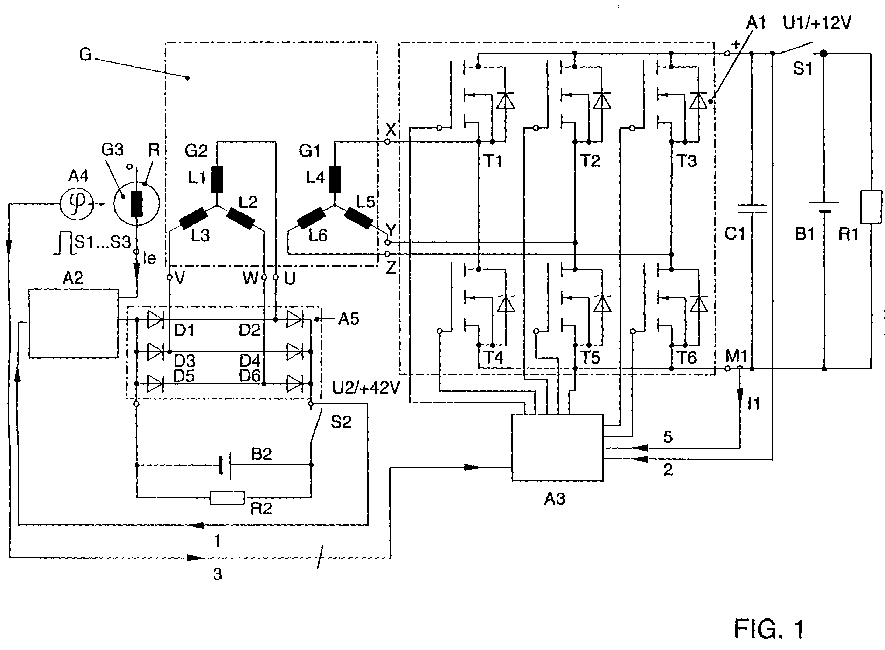

Figur 1 zeigt für einen vom Fahrzeugmotor angetriebenen Generator, auch Lichtmaschine genannt, den Stator G mit einer Drehstromwicklung G2 mit Statorwicklungen L1, L2 und L3 sowie einer Drehstromwicklung G1 mit Statorwicklungen L4, L5 und L6. Die Statorwicklungen L1 und L4 bzw. L3 und L6 bzw. L2 und L5 liegen jeweils in denselben Nuten des Statorpaketes. Die Ausgänge U, V, W der Drehstromwicklung G2 sind mit Eingängen einer Gleichrichterbrücke A5 mit passiven Gleichrichtern D1-D6 verbunden. Die Gleichrichterbrücke A5 erzeugt aus den in den Wicklungen L1, L2, L3 induzierten Wechselspannungen eine Betriebsgleichspannung U2 von +42 Volt, die über den Schalter S2 an die Batterie B2 in Form des Fahrzeugakkus und an eine die die übrigen Verbraucher darstellende Last R2 anschaltbar ist. Die Betriebsspannung U2 ist außerdem über die Leitung 1 an einen Eingang der Steuerschaltung A2 angelegt, deren Ausgang den Erregerstrom Ie durch die Erregerwicklung G3 des Rotors R des Generators steuert. Dem Rotor R ist eine Sensoreinrichtung A4 zugeordnet, die die jeweilige Winkellage des Rotors ermittelt und der Winkellage entsprechende Signale S1...S3 liefert. Die Sensoreinrichtung A4 enthält zum Beispiel Fotohalbleiter (Fotodioden bzw. Fototransistoren als Empfänger, Leuchtdioden als Sender), Hallelemente, Blechlochblenden oder dergleichen. Die Sensoreinrichtung A4 kann ein- oder mehrpolig ausgeführt werden. Ist die Sensoreinrichtung A4 einpolig ausgeführt, so werden in der Steuerschaltung A3 über digitale Schaltwerke (z.B. realisiert in einem FPGA, CPLD oder Gate Array) oder über Steuerungsalgorithmen eines Mikrorechners die Steuersignale für die gesteuerten Gleichrichter T1 bis T6 generiert. Aus der zeitlichen Beobachtung eines einzelnen Sensorsignals kann auf die Rotorlage und die korrekte Steuerimpulserzeugung geschlossen werden. Eine Realisierungsmöglichkeit ergibt sich mit einer digitalen Phasenregelschleife (PLL). Ist die Sensoreinrichtung mehrpolig ausgeführt, so reichen logische Verknüpfungsoperationen zur Steuerimpulserzeugung aus.

Die Ausgänge X, Y, Z der Drehstromwicklung G1 sind mit Eingängen der Gleichrichterbrücke A1 verbunden, die aktiv gesteuerte Gleichrichter T1-T6 in Form von MOS-FETs oder anderen Halbleiterschaltern mit ähnlichen Eigenschaften enthält. Die Gleichrichterbrücke A1 erzeugt eine Betriebsspannung U1 von +12 Volt, die über den Schalter S1 an die Batterie B1 und an die verschiedene Verbraucher darstellende Last R1 anschaltbar ist. Die Betriebsspannung U1 ist außerdem über die Leitung 2 an einen Eingang der Steuerschaltung A3 angelegt. Der Steuerschaltung A3 werden außerdem über die Leitung 3 die Signale S1...S3 über die Winkellage des Rotors R zugeführt.

Im folgenden wird die Wirkungsweise der Schaltung gemäß Figur 1 beschrieben. In der Steuerschaltung A2 wird der jeweilige Wert der Betriebsspannung U2 ausgewertet und in Abhängigkeit davon der Erregerstrom Ie durch die Erregerwicklung G3 so gesteuert, daß auch bei Schwankungen in der Drehzahl des Generators sowie in der Belastung der Gleichrichterbrücke A5 die Betriebsspannung U2 ausreichend konstant bleibt. Die aus den passiven Gleichrichtern D1-D6 bestehende Gleichrichterbrücke A5 ist somit nicht geregelt, und die Stabilisierung von U2 erfolgt ausschließlich über die Steuerung des Erregerstroms Ie.

Wenn der Erregerstrom Ie zur Stabilisierung von U2 geregelt ist, kann die Betriebsspannung U1 im allgemeinen nicht ebenfalls auf einen konstanten Wert geregelt sein, weil die beiden Wicklungen G1 und G2 zwangsläufig demselben Erregerfeld unterliegen. Die Regelung bzw. Stabilisierung der Betriebsspannung U1 erfolgt daher über die als aktiv gesteuerte Gleichrichter arbeitenden MOS-FETs T1-T6. Die Steuerelektroden der MOS-FETs T1-T6 sind an sechs getrennte Ausgänge der Steuerschaltung A3 angeschlossen. In Abhängigkeit von dem jeweiligen Wert von U1 werden die Einschaltdauer oder die Stromflußwinkel der MOS-FETs T1-T6 so gesteuert, daß der Wert von U1 auch bei Schwankungen der Drehzahl und der Belastung stabilisiert wird. Die Steuerschaltung A3 empfängt außerdem über die Leitung 3 die Signale S1...S3 für die drei Statorwicklungen L4, L5 und L6. Die Signale S1...S3 dienen in der Steuerschaltung A3 zur Steuerung der Stromflußwinkel der MOS-FETs T1-T6 innerhalb einer Periode der in G1 induzierten Spannungen. Diese Steuerung erfolgt so, daß der Stromflußwinkel der MOS-FETs T1-T6 innerhalb einer Periode der in G1 induzierten Spannungen mit der in G1 induzierten Spannung weitestgehend in der Phase übereinstimmt und somit der cosφ, der die Phasenverschiebung zwischen induzierter Spannung und fließendem Strom angibt, weitestgehend gleich 1, zum Beispiel etwa 0,96, ist. Dadurch wird die Blindleistung verringert, der Wirkungsgrad des Generators erhöht und der Aufwand an Kupfer und Eisen reduziert. Durch diese Steuerung des cosφ kann somit einem Generator mit bestimmten Abmessungen mehr Nutzleistung entnommen werden.

Im Weg des von der Gleichrichterbrücke A1 gelieferten Betriebsstroms liegt noch die Strommeßbrücke M1. Diese liefert ein den Betriebsstrom darstellendes Signal I1, das über die Leitung 5 einen weiteren Eingang der Steuerschaltung A3 für die Steuerung der Betriebsspannung U1 zugeführt wird. Diese zusätzliche Auswertung des Betriebsstroms zur Regelung von U1 ist vorteilhaft für eine Ladungssteuerung der Batterie, eine Regelung des Stromes bei Starterbetrieb sowie eine Regelung des Stromes im Wechselrichterbetrieb.

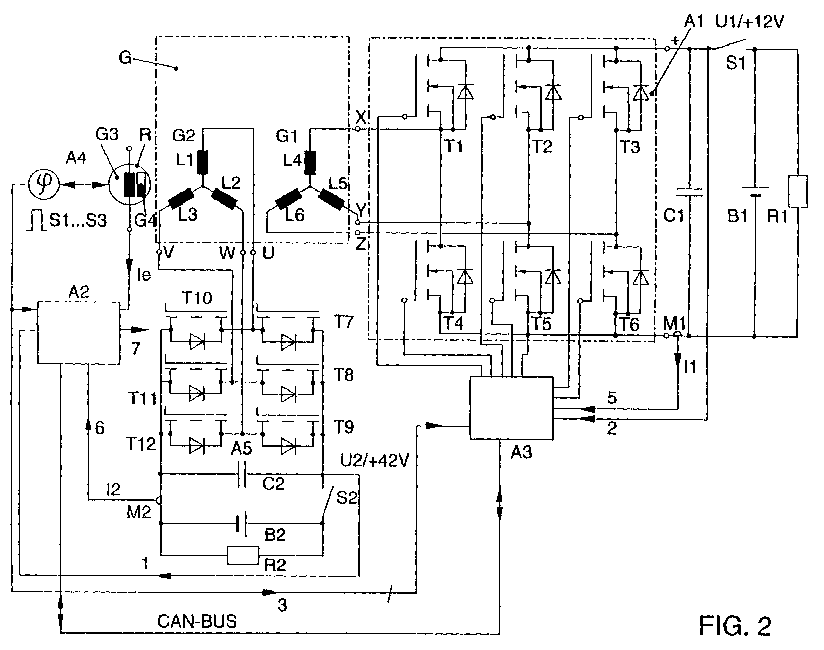

Figur 2, in der gleiche Teile wie in Figur 1 mit denselben Bezugsziffern versehen sind, zeigt eine Abwandlung der Schaltung nach Figur 1, die für drei unterschiedliche Ausführungen des Rotors R anwendbar ist. Die erste Ausführung ist ein wicklungserregter Rotor mit der Erregerwicklung G3 wie in Figur 1. Der zweite Fall ist ein permanenterregter Rotor R mit einem Permanentmagneten G4 ohne die Erregerwicklung G3. Der dritte Fall ist ein sogenannter hybriderregter Rotor R mit der Erregerwicklung G3 und dem Permanentmagneten G4. Im zweiten Fall ist also eine Regelung der erzeugten Betriebsspannung U2 über die Erregerwicklung G3 nicht möglich. Die Stabilisierung der Betriebsspannung U2 wird dann in Figur 2 dadurch erreicht, daß die Ausgänge U, V, W der Wicklung G2 ebenfalls an aktiv gesteuerte Gleichrichter in Form von MOS-FETs T7-T12 angeschlossen sind. Die Betriebsspannung U2 wird über die Leitung 1 einem Eingang der Steuerschaltung A2 zugeführt. Der dargestellte Ausgang 7 der Steuerschaltung A2 stellt sechs getrennte Ausgänge dar, die jeweils mit den Steuerelektroden der aktiv gesteuerten Gleichrichter T10-T12 verbunden sind. Diese Verbindungen sind aus Gründen der Übersichtlichkeit der Zeichnung nicht dargestellt. Die Steuerschaltung A2 steuert den Stromflußwinkel in den MOS-FETs T7-T12 in der Weise, wie es in Figur 1 für die MOS-FETs T1-T6 beschrieben wurde. Zu diesem Zweck werden die Signale S1...S3 über die Winkellage des Rotors R von der Sensoreinrichtung A4 einem Eingang der Steuerschaltung A2 zugeführt. Die Regelung von U2 über die aktiv gesteuerten Gleichrichter T7-T12 kann zusätzlich zur Regelung des Erregerstromes Ie, aber auch dann erfolgen, wenn der Rotor R ein permanenterregter Rotor und somit eine Erregerwicklung G3 nicht vorhanden ist. Die Stromflußwinkel der MOS-FETs T7-T12 werden durch die Signale S1...S3 von der Sensoreinrichtung 4 wieder so gesteuert, daß in der beschriebenen Weise ein $\cos\varphi$ mit einem Wert von annähernd 1 erzielt wird. Die Steuerschaltung A2 kann zum Beispiel durch einen EinChip-Mikrocontroller realisiert sein. Zusätzlich zu der Meßbrücke M1 ist die Meßbrücke M2 zum Messen des von der Gleichrichterbrücke A5 gelieferten Stroms vorgesehen. Die Meßbrücke M2 liefert ein den Betriebsstrom darstellendes Signal I2 über die Leitung 6 an einen weiteren Eingang der Steuerschaltung A2.

Die Anordnung der beiden Statorwicklungen G1 und G2 gemäß Fig. 2 mit der festen Kopplung zwischen diesen Wicklungen kann im Generatorstillstand auch als Transformator zur Energieübertragung in beiden Richtungen verwendet werden. Dann kann zum Beispiel ein Ladegerät mit der Nennspannung U1 von +12 Volt an den Ausgang der Gleichrichterbrücke A1 angeschlossen werden. Die Gleichrichterbrücke A1 dient dann durch die von der Steuerschaltung A3 aktiv gesteuerten MOS-FETs T1-T6 als Wechselrichter zwischen der Batterie B1 und der Statorwicklung G1. Die der Betriebsspannung U1 entsprechende Spannung wird dann durch die Wicklungen G1 und G2 hochtransformiert und erzeugt am Ausgang der Gleichrichterbrücke A5 mit den MOS-FETs T7-T12 die höhere Betriebsspannung U2 mit +42 Volt zur Aufladung der Batterie B2. Auf gleiche Weise ist auch eine Energieübertragung in der entgegengesetzten Richtung möglich. Dann dient die Gleichrichterbrücke A5 mit den von der Steuerschaltung A2 gesteuerten MOS-FETs T7-T12 als Wechselrichter zwischen der Batterie B2 und der Statorwicklung G2.

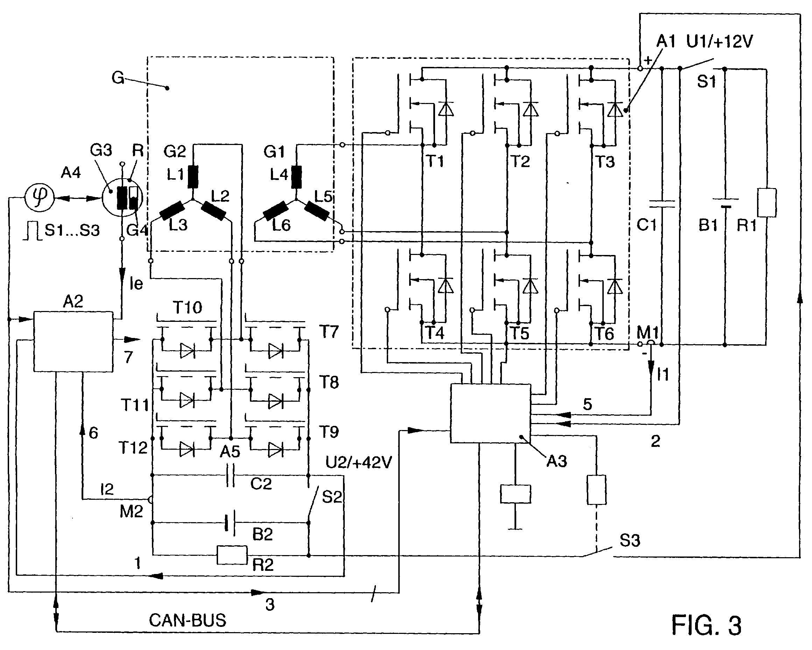

Figur 3 zeigt im Prinzip die Schaltung gemäß Figur 2, jedoch für einen Starterbetrieb für den Fahrzeugmotor bei Motorstillstand. Die Steuerschaltung A3 schließt den Schalter S3 und öffnet den Schalter S1. Die Batterie B1 mit der niedrigeren Spannung U2 von +12 Volt ist dann abgeschaltet. Die hohe Spannung von +42 Volt der Batterie B2 gelangt jetzt über den geschlossenen Schalter S3 auf die Gleichrichterbrücke A1. Diese wirkt wieder als Wechselrichter und speist die Drehstromwicklung G1, die an sich für die niedrigere Betriebsspannung U1 von +12 Volt ausgelegt ist, nunmehr mit der hohen Betriebsspannung U2 von +42 Volt. Dadurch kommt es zu einer starken Stromüberhöhung. Diese reicht aus, um das sogenannte Losbrechmoment des Fahrzeugmotors zu überschreiten, und bewirkt dadurch einen Starterbetrieb. Die Drehstromwicklungen G1 und G2 arbeiten dabei somit als Motor. Dabei erfolgt eine Überwachung des fließenden Stroms und der Drehzahl solange, bis die Verbrennungskraftmaschine, also der Fahrzeugmotor, läuft.

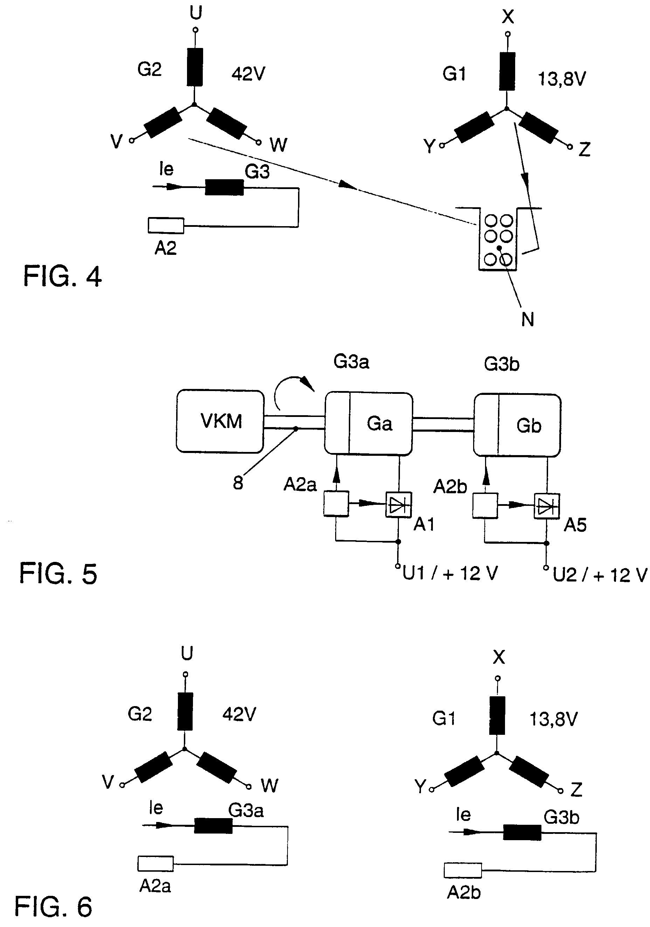

Figur 4 zeigt wieder die beiden Drehstromwicklungen G1 und G2 sowie die vom Erregerstrom Ie gespeiste Erregerwicklung G3 des Rotors, die wie in Figur 1 von der Steuerschaltung A2 mit dem geregelten Erregerstrom Ie gespeist wird. Wie durch die Pfeile angedeutet, liegen jeweils die Statorwicklungen der beiden Drehstromwicklungen G1 und G2 in denselben Nuten N des Ständerpaketes G. Vorzugsweise liegen jeweils die Wicklungen, zum Beispiel L1 und L4 von Figur 1, jeweils in einer Nut N übereinander.

Figur 5 zeigt eine Ausführungsform mit zwei elektrisch voneinander getrennten Generatoren Ga und Gb, die von der Verbrennungskraftmaschine VKM über eine gemeinsame Welle 8 angetrieben werden und über Gleichrichterbrücken A1 und A5 die Betriebsspannungen U1 und U2 liefern. Da die Generatoren Ga und Gb mit den Erregerwicklungen G3a und G3b nunmehr elektrisch und magnetisch voneinander getrennt sind, können beide Betriebsspannungen U1 und U2 getrennt über die Erregerwicklung geregelt und stabilisiert werden, wie durch die Steuerschaltungen A2a und A2b angedeutet ist. Alternativ oder zusätzlich können die Gleichrichterbrücken A1 und A5 mit aktiv gesteuerten Gleichrichtern ausgebildet sein und von der Steuerschaltung A2a und A2b geregelt werden, wie durch die Verbindungen zwischen A2a und A1 bzw. zwischen A2b und A5 angedeutet ist.

Figur 6 zeigt das elektrische Ersatzschaltbild der Anordnung von Figur 5 mit den elektrisch und magnetisch voneinander getrennten Statorwicklungen G1, G2 und den Erregerwicklungen G3a und G3b, die über getrennte Steuerschaltungen A2a und A2b geregelt oder gesteuert werden.

Die Erfindung wurde anhand von MOS-FETs als gesteuerte Halbleiter beschrieben. Gegebenenfalls können anstelle der MOS-FETs auch andere Halbleiterschalter mit ähnlichen Eigenschaften verwendet werden. Derartige Halbleiterschalter lassen sich auch mit Bipolartransistoren aufbauen, zum Beispiel sogenannten IGBT.

**BEZUGSZEICHENLISTE**

1, 2, 3, 5, 6
Leitung
7
Ausgang
8
Welle
A1
Gleichrichterbrücke

A2, A3
Steuerschaltung
A4
Sensoreinrichtung
A5
Gleichrichterbrücke
B1, B2
Batterie
D1, D2, D3, D4, D5, D6
Gleichrichter
G
Stator
G1, G2
Drehstromwicklung
G3
Erregerwicklung
G4
Permanentmagneten
I1, I2
Signal
L1, L2, L3, L4, L5, L6
Statorwicklung
M1, M2
Strommeßbrücke
R1, R2
Last
S1, S2, S3
Signal
T1, T2, T3, T4, T5, T6, T7 T8, T9, T10, T11, T12
gesteuerter Gleichrichter
U
Ausgang
V
Ausgang
W
Ausgang
U1, U2
Betriebsspannung
X
Ausgang
Y
Ausgang
Z
Ausgang

**Patentansprüche**

1. Vorrichtung zur Spannungserzeugung in einem Kraftfahrzeug mit einem von dem Fahrzeugmotor angetriebenen Generator mit einer Erregerwicklung (G3) und einem Stator (G) mit zwei galvanisch voneinander getrennten Wicklungen (G1, G2), von denen zwei verschieden hohe Betriebsspannungen (U1, U2) abgeleitet werden, **dadurch gekennzeichnet,** daß die Wicklungen (G1, G2) in denselben Nuten des Stators (G) liegen, daß die zweite Betriebsspannung (U2) durch Steuerung des Stroms (Ie) in der Erregerwicklung (G3) und die erste Betriebsspannung (U1) durch eine Impulsbreitenmodulation von aktiv gesteuerten Gleichrichtern in Form von MOS-FETs (T1-T12) geregelt ist.

2. Vorrichtung nach Anspruch 1, **dadurch gekennzeichnet,** daß der Stromflußwinkel der MOS-FETs (T1-T6) innerhalb einer Periode der von der Statorwicklung (G1) erzeugten Wechselspannung in Abhängigkeit von der Winkellage des Rotors (R) des Generators so gesteuert ist, daß der Stromflußwinkel etwa phasengleich mit der von der Statorwicklung erzeugten Wechselspannung ist und ein $\cos\varphi$ in der Nähe von 1 erzielt wird.

3. Vorrichtung nach Anspruch 1, **dadurch gekennzeichnet,** daß die erste Betriebsspannung (U1) die niedrigere Betriebsspannung und die zweite Betriebsspannung (U2) die höhere Betriebsspannung ist.

4. Vorrichtung nach Anspruch 1, **dadurch gekennzeichnet,** daß der für die Regelung einer Betriebsspannung (U1, U2) ausgewertete Istwert aus der Betriebsspannung (U1, U2) selbst abgeleitet ist.

5. Vorrichtung nach Anspruch 4, **dadurch gekennzeichnet,** daß jeweils für die Regelung einer Betriebsspannung (U1) zusätzlich der Strom (I1, I2) durch die von der Betriebsspannung gespeiste Last (R1, R2) ausgewertet wird.

6. Vorrichtung nach Anspruch 1, **dadurch gekennzeichnet,** daß die beiden Wicklungen (G1, G2) bei Generatorstillstand als Transformator zum Energieaustausch zwischen den beiden Netzen mit der niedrigen und der hohen Betriebsspannung (U1, U2) ausgenutzt sind.

7. Vorrichtung nach Anspruch 6, **dadurch gekennzeichnet,** daß die jeweils einer Wicklung (G1, G2) zugeordnete Gleichrichterbrücke (A1, A5) mit aktiv gesteuerten Gleichrichtern in Form von MOS-FETs ausgebildet ist und als Wechselrichter für die an die Wicklung angelegte Betriebsspannung (U1, U2) dient.

8. Vorrichtung nach Anspruch 6, **dadurch gekennzeichnet,** daß der Transformator zur Anpassung der Ausgangsspannung eines Ladegerätes an die davon abweichende Nennspannung eines zu ladenden Akkus dient.

9. Vorrichtung nach Anspruch 1, **dadurch gekennzeichnet,** daß für einen Starterbetrieb für den Fahrzeugmotor ein Akku (B2) mit einer Nennspannung entsprechend der höheren Betriebsspannung (U2) an die Statorwicklung (G1) für die niedrigere Betriebsspannung (U1) anschaltbar ist.

10. Vorrichtung nach Anspruch 9, **dadurch gekennzeichnet,** daß der Akku (B2) über eine als Wechselrichter dienende Gleichrichterbrücke (A1) mit aktiv gesteuerten Gleichrichtern in Form von MOS-FETs (T1-T6) oder anderen Halbleiterschaltern an die Wicklung (G1) anschaltbar ist.

11. Vorrichtung zur Spannungserzeugung in einem Kraftfahrzeug
mit einem von dem Fahrzeugmotor (VKM) angetriebenen Generator mit einer Erregerwicklung (G3) und einem Stator (G) mit zwei galvanisch voneinander getrennten Wicklungen (G1, G2), von denen zwei verschieden hohe Betriebsspannungen (U1, U2) abgeleitet werden,
**dadurch gekennzeichnet,** daß die beiden Betriebsspannungen (U1, U2) durch zwei getrennte Generatoren (Ga, Gb) erzeugt werden, die von derselben, vom Fahrzeugmotor (VKM) angetriebenen Welle (8), angetrieben werden.

12. Vorrichtung nach Anspruch 11, **dadurch gekennzeichnet,** daß die Ausgangsspannungen der beiden Generatoren (Ga, Gb) getrennt voneinander jeweils durch Steuerung der Erregerwicklung (G3a, G3b) des jeweiligen Generators geregelt sind.

13. Vorrichtung nach Anspruch 11, **dadurch gekennzeichnet,** daß jeweils die Ausgangsspannung eines Generators (Ga, Gb) durch eine gesteuerte Gleichrichterbrücke (A1, A5) mit aktiv steuerbaren Gleichrichtern in Form von MOS-FETs geregelt ist.

14. Vorrichtung nach Anspruch 1, **dadurch gekennzeichnet,** daß die MOS-FETs (T1-T12) durch Halbleiterschalter ersetzt sind, die aus Bipolartransistoren (IGBT) aufgebaut sind.

FIG. 1

FIG. 2

FIG. 3

FIG. 4

FIG. 5

FIG. 6